# EUROPEAN PATENT SPECIFICATION

(11) **EP 4 104 280 B1**
(45) Date of publication and mention of the grant of the patent: **20.05.2026**
(21) Application number: 20705036.0
(22) Date of filing: 11.02.2020
(51) Int. Cl.: H02K 47/20, H02K 47/22, H02K 5/26, H02K 7/102

(54) **ROTARY PHASE CONVERTER AND METHOD OF OPERATION**
DREHPHASENWANDLER UND BETRIEBSVERFAHREN
CONVERTISSEUR DE PHASE TOURNANT, ET MÉTHODE DE FONCTIONNEMENT

(43) Date of publication of application: 21.12.2022
(73) Proprietor: Voith Patent GmbH, 89522 Heidenheim (DE)
(72) Inventor: ROOS, Björn, 72231 Västerås (SE); HENRIKSSON, Torbjörn, 72348 Västerås (SE)
(86) International application number: PCT/EP2020/053408
(87) International publication number: WO 2021/160251

(56) References cited:
- WO-A1-94/00905
- DE-A1- 2 937 754
- FR-A- 1 221 468
- GB-A- 191 102 867
- PFEIFFER A ET AL: "Modern rotary converters for railway applications", RAILROAD CONFERENCE, 1997., PROCEEDINGS OF THE 1997 IEEE/ASME JOINT BOSTON, MA, USA 18-20 MARCH 1997, NEW YORK, NY, USA,IEEE, US, 18 March 1997 (1997-03-18), pages 29 - 33, XP010218225, ISBN: 978-0-7803-3854-8, DOI: 10.1109/RRCON.1997.581349

## Description

The present invention is related to a rotary phase converter. Particularly the invention is related to a mobile rotary phase converter for railway systems.

Rotary phase converters (RPC), also known as motor generator (M-G setup), convert one or a combination of frequency, voltage or phase from a poly-phase system to another phase system by rotary motion (1 to several phases). There are several possible setups of RPC that convert single-phase electric power to three-phase electric power and vice versa or three-phase to three phase but alternating the number of poles thus changes the frequency. One common example is between 3 phase to 3 phase grid systems converting 50 Hz to 60 Hz and back. Another for traction converting 3 phase 50 Hz to 1 phase 16 and 2/3 Hz or 3 phase to three phase 60Hz to 25Hz.

Such RPCs are commonly used for railway systems. In general a RPC comprises a rotating part (rotor) and a non-rotating part (stator). The stator comprises at least one core with a plurality of slots and a plurality of winding elements, which are housed in these slots.

US 1 669 576 A and US 1 249 783 A disclose such RPCs, whereas the later document is focused on providing means for maintaining proper phase relations and voltage conditions throughout variation in load.

GB 02867 A discloses such an RPC, wherein the stator frame is pivot-mounted on a base to enable a rotation of the stator core around a center of rotation of the rotor. PFEIFFER A ET AL: "Modern rotary converters for railway applications", RAILROAD CONFERENCE, 1997, PROCEEDINGS OF THE 1997 IEEE/ASME JOINT BOSTON, MA, USA 18-20 MARCH 1997, NEW YORK, NY, USA, IEEE, US, 18 March 1997, pages 29-33 discloses an RPC where the stator of one of the machines can be discretely adjusted by a mechanical rotation device. WO 94/00905 A1 discloses an RPC with a stator frame, that is pivot mounted, the generator and motor-generator acting as actuator means.

The object of the present invention is to provide a RPC, which allows for rapid adjustment of voltage and current phase. The RPC according the present invention enables the adjustment of the phase angel between the different systems (Motor-Generator) while the M-G setup is in operation. This object is attained, in general, by enabling a rotational movement of the at least one core around the rotor axis.

This objective is solved according to the present invention by a RPC in accordance with the independent claim. Other advantageous embodiments of the present invention are defined by the dependent claims. The independent method claim defines the operating procedure of the RPC according to the present invention.

The embodiments of the present invention will be described on the basis of the following figures:
- Fig.1: Axial view of an embodiment according to prior art
- Fig.2: Axial view of an embodiment of the present invention
- Fig.3: Lateral view of the embodiment according to fig. 2
- Fig.4: Details of a strip actuator
- Fig. 5: Diagram of the operating procedure

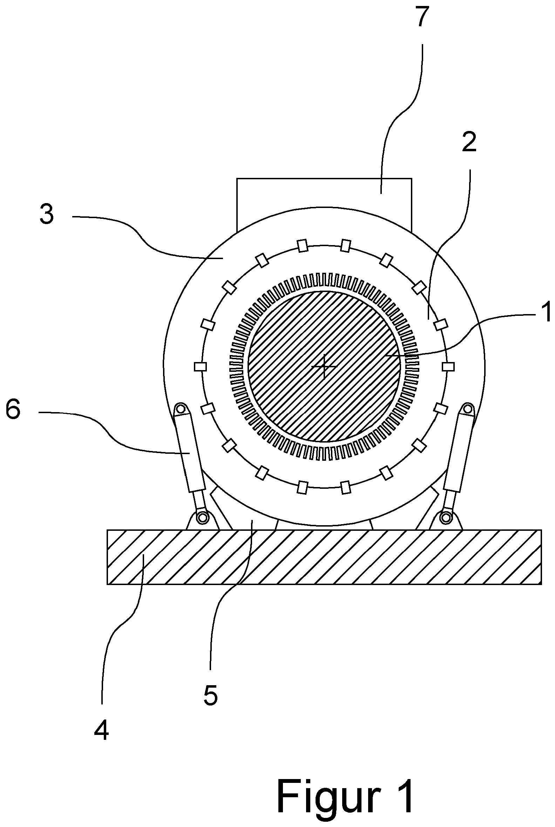

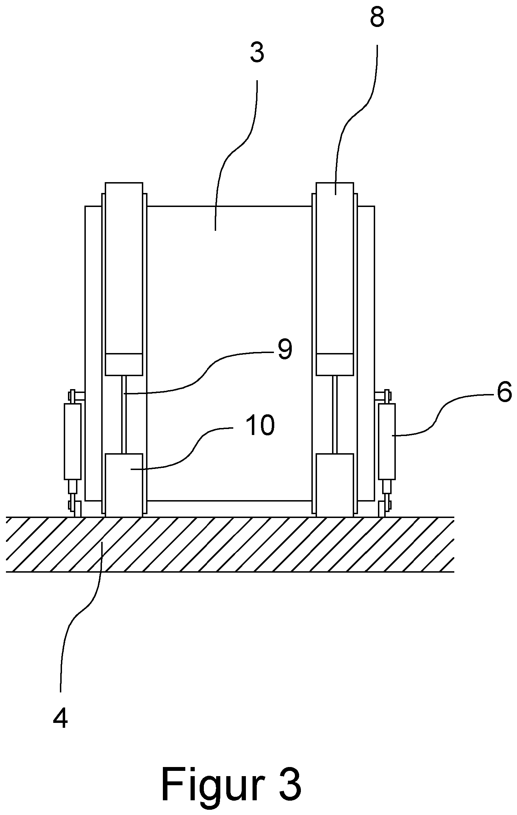

Figure 1 displays schematically a RPC according to prior art in an axial view. The RPC comprises at least one rotor, which is designated by 1, at least one stator core, which is designated by 2, and at least one stator frame, which is designated by 3. The stator core 2 is connected to the stator frame 3. Usually a RPC comprises two electric machines, one acting as a motor and the other acting as a generator. Each of the two electric machines comprises a rotor, a stator core and a stator frame, whereas both rotors reside on a common rotary shaft. In Figure 1 the center of rotation is indicated by a cross. The stator core 2 comprises a plurality of slots to receive the winding elements (not shown for clarity). The RPC comprises a base, which is designated by 4. According to prior art the stator frame 3 is mounted stationary to the base 4 thus holding the stator core 2 in a fixed angular position in relation to the center of rotation. According to the present invention the RPC is constructed to enable a rotation of the stator core 2 around the center of rotation. Therefore the stator frame 3 is pivot-mounted on the base 4. For enabling of said rotation the RPC comprises a suited pivot bearing. The pivot bearing comprises at least one bearing surface extending around the stator frame 3, and corresponding bearing pads. In Figure 1 one of the bearing pads is designated by 5. In Figure 1 the bearing pads are connected to the base 4 and the bearing surface is connected to the stator frame 3, which is the normal arrangement. The bearing arrangement could however be reversed by connecting the bearing surface to the base 4 and connecting the bearing pads to the stator frame 3. To enable a defined rotation of the stator core 2 the RPC comprises at least one actuator, which is arranged between stator frame 3 and base 4 in a way that the actuator can move the stator frame 3 relative to the base 4 and thus achieve a rotation of the stator core 2 around the center of rotation. It is of advantage to provide more than one actuator. Figure 1 shows two actuators, one of them being designated by 6. Advantageously the RPC comprises four actuators 6 (compare figure 3). Favorably the actuators 6 are of the type of hydraulic cylinder, but also other types of actuators could be used, e.g. electric actuators.

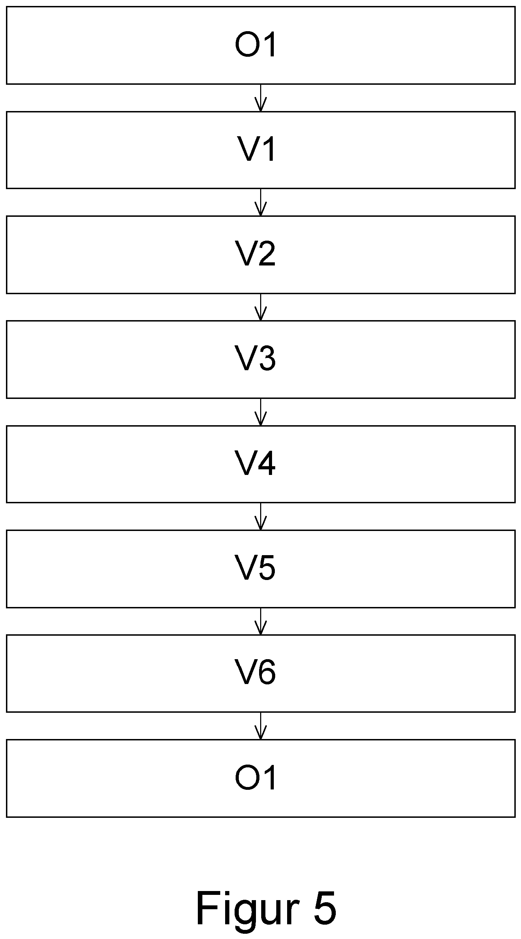

Since the rotation of the stator core 2 is performed only in a special operation mode for adjusting the phase, the stator core 2 has to be kept fixed at a certain angular position during normal operation (compare the explanations to figure 5). Thus the RPC comprises means to fix of the stator core 2 at a predefined angular position related to the center of rotation. If the actuators 6 are strong enough, they can keep the stator frame 3 and thus the stator core 2 in a fixed position during all operational states. By providing additional means for fixation besides the actuators 6 the needed size of the actuators 6 can be reduced. Figure 1 shows an element, which is designated by 7. This could be a bearing pad or a brake pad acting as an additional mean for fixation. In any case the element has to be connected to the base 4 (not shown for simplicity). In the case, that element 7 is a brake pad, the braking force could of course be varied by varying the pressing force of the brake pad. The brake pad could be pressed against the bearing surface or a separate braking surface. Is should also be mentioned, that the element 7 being designed to be a brake pad acts nevertheless as a bearing pad in case that the pressing force is reduced to allow for the actuators 6 rotating the stator frame 3. There could also be provided other means for fixation not acting as a bearing pad of a pivot bearing, for example brake pads being pressed against a surface located on a front end of the stator frame 3.

The objective of the present invention is achieved by enabling a rotational movement of a stator core during operation of the RPC. This could be either the stator core of the motor or the stator core of the generator of the RPC.

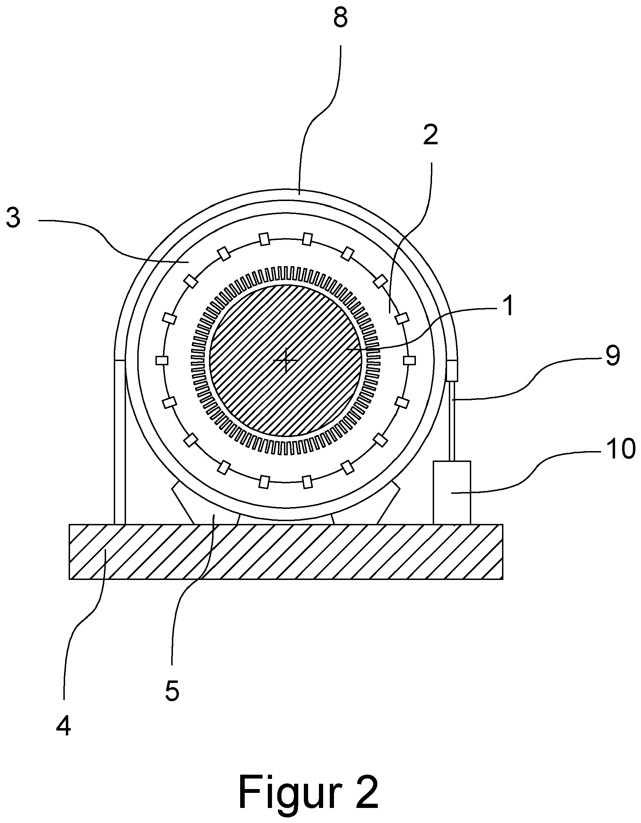

Figure 2 displays schematically a RPC according to an embodiment of the present invention in an axial view. The designations correspond to the designations of figure 1. For the sake of clarity the actuators 6 are not shown in figure 2. The RPC comprises at least one metal strip wound around the part of the stator frame 3 opposite to the base 4. The metal strip is designated by 8 and is favorably made of steel. One end of the metal strip 8 is connected to the base 4 and the other end is connected to a rod, which is designated by 9. The rod 9 is connected to an actuator being designed to apply a variable tension to the metal strip 8. This strip actuator is designated by 10 and connected to the base 4. Similar to element 7 of figure 1 the metal strip 8 of figure 2 has the combined effect of a bearing and a braking element, whereas the braking effect depends on the amount of tension provided by the strip actuator 10. Of course also for the bearing effect a sufficient high tension has to be applied to the metal strip 8.

Figure 3 displays the embodiment of figure 2 in a lateral view. The RPC comprises two metal strips 8 and the corresponding rods 9 and strip actuators 10. The RPC comprises two pairs of actuators 6. In figure 3 the bearing pads 5 are not shown for the sake of clarity.

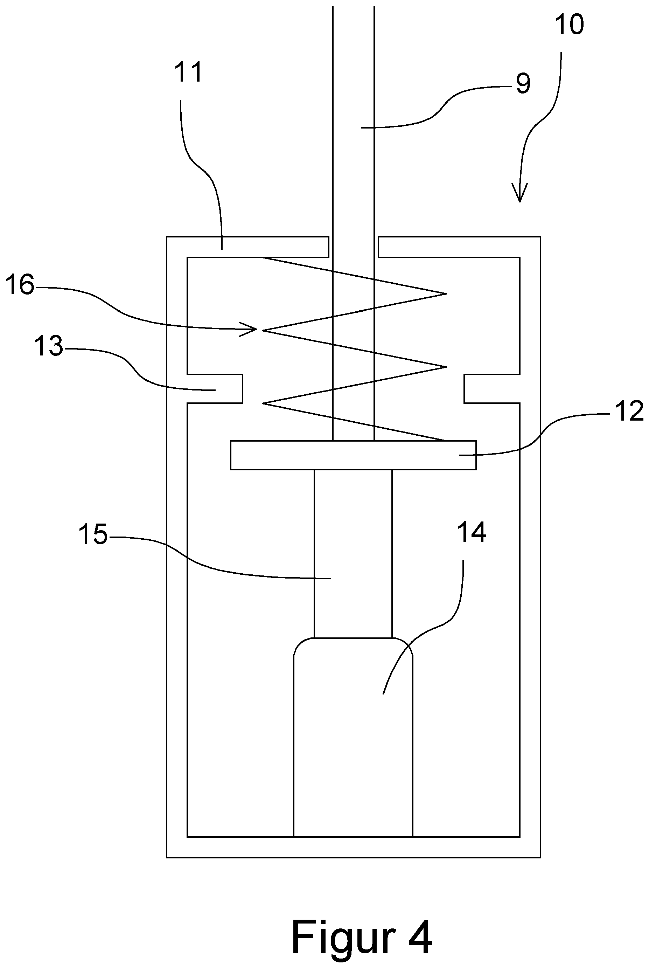

Strip actuators 10 could be any kind of actuator being able to provide a variable tension to metal strips 8. Since in normal operation the stator core 3 has to be prevented from rotational movement, the tension has to be kept on a high enough level. It is therefore favorable, that strip actuators 10 are able to provide high tension without permanently consuming energy. Figure 4 displays the details of a strip actuator 10 being designed to correspond to that demand. The strip actuator 10 comprises a housing, which is designated by 11, an opening for the receipt of rod 9, a end plate, which is designated by 12 and connected to the rod 9, and a spring, which is designated by 16 and located between housing 11 and end plate 12. The spring 16 is pre-stressed, designed and arranged in a way that by pressing against the housing 11 and the end plate 12 the metal strip 8 is tensioned by the spring 16. For reducing the tension of the metal strip 8 the strip actuator 10 comprises a tension release actuator. The tension release actuator comprises a body, which is designated by 14 and a plunger, which is designated by 15. The tension release actuator is arranged between housing 11 and end plate 12 in a way that the tension in the metal strip 8 can be reduced by extending the plunger 15. Tension release actuator could be any kind of actuator being able to apply a force to the end plate 12. Favorably the tension release actuator is of the type of hydraulic cylinder.

Optionally the strip actuator 10 comprises a mechanical stop, which is designated by 13 and is designed and arranged in a way to be able to prevent the tension in the metal strip 8 from being reduced below a predefined level. In figure 4 the mechanical stop 13 is a protrusion of the housing 11. The protrusion 13 is arranged in a way that it can engage in the end plate 12 and thus prevent an upward movement of the end plate 12 above a predefined level. In the case, that the tension release actuator is of the type hydraulic cylinder operational safety could be increased by adding an overpressure valve to prevent damage to the mechanical stop 13 or the end plate 12.

Optionally the strip actuator 10 comprises a second pre-stressed spring (not shown in figure 4) located between the end plate 12 and the body 14 of the tension release actuator or the bottom of the housing 11. The second spring counteracts the first spring 16 and reduces thus the force to be provided by the tension release actuator.

Figure 5 displays the diagram of the operation procedure of an RPC according to the present invention. The procedure starts in the state of normal operation and ends in the state of normal operation. These states are designated by O1. In normal operation a torsional moment of M_{d} acts on the stator core. Of course the means of fixation of the rotor core have to be designed to be able to counteract the torsional moment M_{d}. In the state O1 the actuators 6 are locked and the additional fixation means (if there are any) are configured to provide maximal braking force. The maximal braking force is predefined in order to fix the stator core securely under normal operation conditions. In the step designated by V1 the operational state of the RPC is change in order to reduce the torsional moment acting on the stator core. The amount of reduction is depending on the layout of the RPC and the size of the actuators and the additional fixations means (if present). A reduction to about 25% of M_{d} is in most cases a feasible and reasonable amount. The step designated by V2 is carried out in case that the RPC comprises additional fixation means. In the step V2 the braking force of the additional fixation means is reduced to a predefined value. The predefined value is depending on the size of the actuators in order to allow the actuators to rotate the stator frame. In the step designated by V3 the actuators are unlocked, powered up and operated in a way to rotate the stator frame. Of course the actuators have to act synchronized in case that there are several actuators. To achieve the objective of the present invention, it is sufficient that the angle of rotation is restricted to a certain range. The range is dependent on the layout of the RPC. In most cases a range of about ± 10° is sufficient. In the step designated by V4 the actuators are powered down and locked. Of course step V4 is executed after the rotation of the stator core has reached the desired rotation angle. The step designated by V5 is carried out in case that the RPC comprises additional fixation means. In the step V5 the braking force of the additional fixation means is increase to the maximal value. In the step designated by V6 the operational state of the RPC is changed to reach again normal operation in the following state O1.

### Designations

- 1: Rotor
- 2: Stator core
- 3: Stator frame
- 4: Base plate
- 5: Bearing segment
- 6: Actuator
- 7: Bearing pad or brake pad
- 8: Metal strip
- 9: Rod
- 10: Strip actuator
- 11: Housing
- 12: End plate
- 13: Mechanical stop
- 14: tension release actuator body
- 15: tension release actuator plunger
- 16: Spring

## Claims

1. Rotary phase converter (RPC) comprising a rotor (1), a stator core (2), a stator frame (3) and a base (4), whereas the stator core (1) is connected to the stator frame (3) and the rotor (1) is rotatable around a center of rotation, wherein the stator frame (3) is pivot-mounted on the base (4) in order to enable a rotation of the stator core (2) around the center of rotation of the rotor (1), and whereas the RPC comprises an actuator (6) arranged between the stator frame (3) and the base (4) in a way, that the actuator (6) can move the stator frame (3) relative to the base (4) in order to establish a rotation of the stator core (2) around the center of rotation, and means (8, 9, 10) to fix the stator core (2) at a predefined angular positon related to the center of rotation, **characterized in that** the means to fix the stator core (2) comprise a metal strip (8) wound around the part of the stator frame (3) opposite to the base (4), a rod (9) and a strip actuator (10), whereas one end of the metal strip (8) is connected to the base (4) and the other end is connected to the rod (9), and whereas the strip actuator (10) is connected to the base (4) and to the rod (9) in a way to apply a variable tension to the metal strip (8).

2. RPC according to claim 1, whereas the RPC comprises a bearing surface extending around the stator frame (3) and a plurality of bearing pads (5, 7), whereas the bearing surface is connected to the stator frame (3) and the bearing pads (5, 7) are connected to the base (4).

3. RPC according to claim 1 or 2, whereas the strip actuator (10) comprises a housing (11), an opening for the receipt of the rod (9), an end plate (12) connected to the rod (9) and a spring (16) being located between the housing (11) and the plate (12), whereas the spring (16) is pre-stressed, designed and arranged in a way that by pressing against the housing (11) and the end plate (12) the metal strip (8) is tensioned by the spring (16), and whereas the strip actuator (10) comprises a tension release actuator with a body (14) and a plunger (15), whereas the tension release actuator is arranged between housing (11) and end plate (12) in a way that the tension in the metal strip (8) can be reduced by extending the plunger (15).

4. RPC according to claim 3, whereas the strip actuator (10) comprises a mechanical stop (13), which is designed and arranged in a way to be able to prevent the tension in the metal strip 8 from being reduced below a predefined level.

5. RPC according to claim 4, whereas the mechanical stop (13) is a protrusion of the housing (11) being arranged in a way that it can engage in the end plate (12).

6. RPC according to one of the preceding claims, whereas the RPC comprises two pairs of actuators (6).

7. RPC according to one of the preceding claims, whereas the RPC comprises two electric machines, one acting as a motor and the other acting as a generator, whereas the pivot-mounted stator frame (3) is part of the motor.

8. Method of operating a rotary phase converter (RPC) according to one of the preceding claims, whereas the method starts and ends in the state of normal operation (O1), whereas during this state (O1) all actuators (6) are locked and the additional fixation means (8, 9, 10) are configured to provide a maximal braking force, and whereas the method comprises the steps V1 to V6, which are performed in the following order:
V1: The operational state of the RPC is change in order to reduce the torsional moment (M_{d}) acting on the stator core (2);
V2: The braking force of the additional fixation means (8, 9, 10) is reduced to a predefined value;
V3: The actuators (6) are unlocked, powered up and operated in a way to rotate the stator frame (3);
V4: The actuators (6) are powered down and locked;
V5: The braking force of the additional fixation means (8, 9, 10) is increase to the maximal value;
V6: The operational state of the RPC is changed to reach again normal operation.

## Patentansprüche

1. Rotationsphasenwandler (RPC), bestehend aus einem Rotor (1), einem Statorkern (2), einem Statorrahmen (3) und einem Sockel (4), wobei der Statorkern (1) mit dem Statorrahmen (3) verbunden ist und der Rotor (1) um einen Drehpunkt drehbar ist, wobei der Statorrahmen (3) schwenkbar an der Basis (4) gelagert ist, um eine Drehung des Statorkerns (2) um den Drehpunkt des Rotors (1) zu ermöglichen, und wobei der RPC einen Aktuator (6) umfasst, der zwischen dem Statorrahmen (3) und dem Sockel (4) derart angeordnet ist, dass der Aktuator (6) den Statorrahmen (3) relativ zum Sockel (4) bewegen kann, um eine Drehung des Statorkerns (2) um den Drehpunkt zu bewirken, sowie Mittel (8, 9, 10) zur Fixierung des Statorkerns (2) in einer vordefinierten Winkelposition relativ zum Drehpunkt, **dadurch gekennzeichnet, dass** die Mittel zur Fixierung des Statorkerns (2) einen Metallstreifen (8) umfassen, der um den der Basis (4) gegenüberliegenden Teil des Statorrahmens (3) gewickelt ist, einer Stange (9) und eines Bandaktuators (10) bestehen, wobei ein Ende des Metallstreifens (8) mit der Basis (4) und das andere Ende mit der Stange (9) verbunden ist und wobei der Bandaktuator (10) mit der Basis (4) und der Stange (9) derart verbunden ist, dass er eine variable Spannung auf den Metallstreifen (8) ausübt.

2. RPC nach Anspruch 1, wobei das RPC eine sich um den Statorrahmen (3) erstreckende Lagerfläche und eine Vielzahl von Lagerpolstern (5, 7) umfasst, wobei die Lagerfläche mit dem Statorrahmen (3) verbunden ist und die Lagerpolster (5, 7) mit der Basis (4) verbunden sind.

3. RPC nach Anspruch 1 oder 2, wobei der Streifenaktuator (10) ein Gehäuse (11), eine Öffnung zur Aufnahme der Stange (9), eine mit der Stange (9) verbundene Endplatte (12) und eine zwischen dem Gehäuse (11) und der Platte (12) angeordnet ist, wobei die Feder (16) vorgespannt, so ausgelegt und angeordnet ist, dass durch Anpressen an das Gehäuse (11) und die Endplatte (12) der Metallstreifen (8) durch die Feder (16) gespannt wird, und wobei der Bandaktuator (10) einen Spannungsentlastungsaktuator mit einem Pneumatikzylinder (14) und einem Kolben (15) umfasst, wobei der Spannungsentlastungsaktuator zwischen Gehäuse (11) und Endplatte (12) derart angeordnet ist, dass die Spannung im Metallband (8) durch Ausfahren des Kolbens (15) verringert werden kann.

4. RPC nach Anspruch 3, wobei der Bandaktuator (10) einen mechanischen Anschlag (13) umfasst, der so ausgebildet und angeordnet ist, dass er verhindern kann, dass die Spannung im Metallband (8) unter ein vordefiniertes Niveau gesenkt wird.

5. RPC nach Anspruch 4, wobei der mechanische Anschlag (13) ein Vorsprung des Gehäuses (11) ist, der so angeordnet ist, dass er in die Endplatte (12) eingreifen kann.

6. RPC nach einem der vorstehenden Ansprüche, wobei das RPC zwei Aktuatorpaare (6) umfasst.

7. RPC nach einem der vorstehenden Ansprüche, wobei der RPC zwei elektrische Maschinen umfasst, von denen eine als Motor und die andere als Generator wirkt, wobei der schwenkbar gelagerte Statorrahmen (3) Teil des Motors ist.

8. Verfahren zum Betreiben eines Rotationsphasenwandlers (RPC) gemäß einem der vorstehenden Ansprüche, wobei das Verfahren im Normalbetriebszustand (O1) beginnt und endet, wobei während dieses Zustands (O1) alle Aktuatoren (6) verriegelt sind und die zusätzlichen Befestigungsmittel (8, 9, 10) so konfiguriert sind, dass sie eine maximale Bremskraft bereitstellen, und wobei das Verfahren die Schritte V1 bis V6 umfasst, die in der folgenden Reihenfolge ausgeführt werden:
V1: Der Betriebszustand des RPC wird geändert, um das auf den Statorkern (2) wirkende Drehmoment (M_{d}) zu verringern;
V2: Die Bremskraft der zusätzlichen Fixierungsmittel (8, 9, 10) wird auf einen vordefinierten Wert reduziert;
V3: Die Aktuatoren (6) werden entriegelt, mit Strom versorgt und so betätigt, dass sie den Statorrahmen (3) drehen;
V4: Die Aktuatoren (6) werden abgeschaltet und verriegelt;
V5: Die Bremskraft der zusätzlichen Befestigungsvorrichtungen (8, 9, 10) wird auf den Maximalwert erhöht;
V6: Der Betriebszustand des RPC wird geändert, um wieder den Normalbetrieb zu erreichen.

## Revendications

1. Convertisseur de phase rotatif (RPC) comprenant un rotor (1), un noyau de stator (2), un châssis de stator (3) et une base (4), le noyau de stator (2) étant relié au châssis de stator (3) et le rotor (1) pouvant tourner autour d'un centre de rotation, le châssis de stator (3) étant monté de manière pivotante sur la base (4) afin de permettre une rotation du noyau de stator (2) autour du centre de rotation du rotor (1), et dans lequel le RPC comprend un actionneur (6) disposé entre le châssis de stator (3) et la base (4) de telle sorte que l'actionneur (6) puisse déplacer le châssis de stator (3) par rapport à la base (4) afin d'établir une rotation du noyau de stator (2) autour du centre de rotation, ainsi que des moyens (8, 9, 10) pour fixer le noyau de stator (2) dans une position angulaire prédéfinie par rapport au centre de rotation, **caractérisé en ce que** les moyens de fixation du noyau de stator (2) comprennent une bande métallique (8) enroulée autour de la partie du châssis de stator (3) opposée à la base (4), une tige (9) et un actionneur à bande (10), l'une des extrémités de la bande métallique (8) étant reliée à la base (4) et l'autre extrémité étant reliée à la tige (9), et l'actionneur à bande (10) étant relié à la base (4) et à la tige (9) de manière à appliquer une tension variable à la bande métallique (8).

2. RPC selon la revendication 1, dans lequel le RPC comprend une surface d'appui s'étendant autour du châssis de stator (3) et une pluralité de patins d'appui (5, 7), la surface d'appui étant reliée au châssis de stator (3) et les patins d'appui (5, 7) étant reliés à la base (4).

3. RPC selon la revendication 1 ou 2, dans lequel l'actionneur à bande (10) comprend un boîtier (11), une ouverture destinée à recevoir la tige (9), une plaque d'extrémité (12) reliée à la tige (9) et un ressort (16) situé entre le boîtier (11) et la plaque (12), le ressort (16) étant précontraint, conçu et agencé de telle sorte que, en appuyant contre le boîtier (11) et la plaque d'extrémité (12), la bande métallique (8) est mise en tension par le ressort (16), et dans lequel l'actionneur à bande (10) comprend un actionneur de relâchement de tension comportant un corps d' (14) et un piston (15), l'actionneur de relâchement de tension étant agencé entre le boîtier (11) et la plaque d'extrémité (12) de telle sorte que la tension dans la bande métallique (8) puisse être réduite en étendant le piston (15).

4. RPC selon la revendication 3, dans lequel l'actionneur de bande (10) comprend une butée mécanique (13), qui est conçue et agencée de manière à pouvoir empêcher que la tension dans la bande métallique (8) ne soit réduite en dessous d'un niveau prédéfini.

5. RPC selon la revendication 4, dans lequel la butée mécanique (13) est une saillie du boîtier (11) agencée de manière à pouvoir s'engager dans la plaque d'extrémité (12).

6. RPC selon l'une des revendications précédentes, dans lequel le RPC comprend deux paires d'actionneurs (6).

7. RPC selon l'une des revendications précédentes, dans lequel le RPC comprend deux machines électriques, l'une agissant comme un moteur et l'autre comme un générateur, et dans lequel le châssis de stator monté sur pivot (3) fait partie du moteur.

8. Procédé de fonctionnement d'un convertisseur de phase rotatif (RPC) selon l'une des revendications précédentes, dans lequel le procédé commence et se termine à l'état de fonctionnement normal (O1), dans lequel, pendant cet état (O1), tous les actionneurs (6) sont verrouillés et les moyens de fixation supplémentaires (8, 9, 10) sont configurés pour fournir une force de freinage maximale, et dans lequel le procédé comprend les étapes V1 à V6, qui sont exécutées dans l'ordre suivant :
V1 : L'état de fonctionnement du RPC est modifié afin de réduire le moment de torsion (M_{d}) agissant sur le noyau de stator (2) ;
V2 : La force de freinage des moyens de fixation supplémentaires (8, 9, 10) est réduite à une valeur prédéfinie ;
V3 : Les actionneurs (6) sont déverrouillés, mis sous tension et actionnés de manière à faire tourner le châssis du stator (3) ;
V4 : Les actionneurs (6) sont mis hors tension et verrouillés ;
V5 : La force de freinage des moyens de fixation supplémentaires (8, 9, 10) est augmentée jusqu'à la valeur maximale ;
V6 : L'état de fonctionnement du RPC est modifié afin de revenir à un fonctionnement normal.
